# EUROPEAN PATENT APPLICATION

(11) **EP 3 616 825 A1**
(43) Date of publication of application: **04.03.2020**
(21) Application number: 18020477.8
(22) Date of filing: 01.10.2018
(51) Int. Cl.: B23K 10/00, H05H 1/28, H05H 1/34, B23K 35/02

(54) **CRYO COOLING OF GAS COOLED PLASMA ARC TORCHES**

(30) Priority: 03.09.2018 GB 201814252
(71) Applicant: Linde Aktiengesellschaft, 80331 München (DE)
(72) Inventor: Nakhleh, Hussary, 85737 Ismaning (DE)

(57) **Abstract**

The invention relates to a device (1) for plasma cutting a workpiece (W), comprising a cutting torch (100) configured to generate a plasma arc (A) between the cutting torch (100) and the workpiece (W), wherein the cutting torch (100) comprises an electrode (120), which is coaxially surrounded by a nozzle (110), thereby defining a first passage (112) for passing of a plasma gas (PG) between electrode (120) and nozzle (110), wherein the nozzle (110) is coaxially surrounded by a shielding cap (122), thereby defining a second passage (114) for passing of a shielding medium flow (S F) between nozzle (110) and shielding cap (122). According to the invention, the electrode (120) forms at least one channel (121) for receiving cryogenic CO₂ so that cryogenic CO₂ can touch the electrode to cool the electrode, or that the cutting torch (100) comprises at least one channel (121) arranged adjacent the electrode (112), which at least one channel (121) is in thermal contact with the electrode (111) so as to cool the electrode (112). Furthermore, the invention relates to a method for plasma cutting a workpiece (W).

## Description

The present invention relates to a device for plasma cutting a workpiece.

Plasma is a super-heated, electrically conductive fluid composed of positive and negative ions, electrons and excited and neutral atoms and molecules. Different gases/fluids can be used as the plasma gases/fluids. These gases/fluids dissociate and ionize by means of the electrical energy deposited into the plasma by the electric arc.

The plasma arc cutting process, also known as plasma cutting or arc cutting, a well-known manufacturing process, is commonly used for cutting, marking and gouging of conductive materials. Plasma cutting uses a highly constricted arc with a high energy density and high pressure to heat, melt and blow the resulting molten material off a workpiece to be cut. The process typically uses a plasma forming gas and a shielding medium, particularly a shielding fluid. The shielding medium can be a gas or a liquid (e.g. water) that is injected around a main plasma arc.

In plasma cutting, a cutting torch is utilized, which typically comprises an electrode, a nozzle, a plasma gas source, a shield medium source, and a shield cap (also denoted as shield).

Within the nozzle, a plasma arc is generated between the nozzle and the electrode during the piloting phase. As the arc exits the nozzle, under the action of the plasma forming gas flow, a power supply of the device senses the extension of the arc towards the workpiece and disconnects the nozzle from the circuit forcing the arc to fully transfer to the workpiece. The parameters of a plasma arc can be influenced by the design of the nozzle, from which the plasma arc is ejected, and the electrode within the nozzle, shield nozzle, and both the gas/fluid distribution members for both the plasma and the shield lines

Frequently, gas cooled torches in plasma processing (specifically cutting and welding) suffer from overheating of the torch and torch components resulting in a reduced life span of the respective component.

More specifically, high heat input into the electrode and the nozzle in gas cooled plasma cutting torches suffer from low consumable life span. The lower consumable life span translates into longer down times and higher cost to the manufacturer using the device.

Therefore, regarding the above-described disadvantages it is an object of the present to provide an improved device for plasma cutting a workpiece.

This problem is solved by a device having the features of claim 1 as well as by a method having the features of claim 14. Particular embodiments of the respective aspect of the present invention are stated in the corresponding sub claims or are described below.

According to claim 1 a device for plasma cutting a workpiece is disclosed, comprising a cutting torch configured and adapted to generate a plasma arc between the cutting torch and the workpiece, wherein the cutting torch comprises an electrode which is coaxially surrounded by a nozzle, thereby defining a first passage for passing of a plasma gas between said electrode and said nozzle, wherein the nozzle is coaxially surrounded by a shielding cap, thereby defining a second passage for passing of a shielding medium flow between nozzle and shielding cap.

According to the present invention, the electrode itself forms at least one channel integrated into the electrode for receiving cryogenic CO₂ so that cryogenic CO₂ can touch the electrode to directly cool the electrode upon plasma cutting, or characterized in that the cutting torch comprises at least one channel arranged in the vicinity of the electrode, which channel is in thermal contact with the electrode so as to indirectly cool the electrode upon plasma cutting.

Particularly, in the framework of the present invention, cryogenic CO₂ means that the CO₂ comprises a temperature below a certain threshold that allows using the CO₂ as a coolant upon plasma cutting. The cryogenic CO₂ can be in the gaseous state, in the liquid state or in the solid state (i.e. CO₂ snow).

According to a preferred embodiment, the cryogenic CO₂ is CO₂ snow or comprises CO₂ snow.

Furthermore, the cryogenic CO₂ can be a mixture of any two states (e.g. a mixture of gaseous and liquid CO₂, a mixture of liquid and solid CO₂, or a mixture of gaseous and solid CO₂), or a mixture of all three states (gaseous, liquid and solid CO₂).

Particularly, the temperature of the cryogenic CO₂ is below 20eC, particularly below 10eC, particularly below 0é, particularly below-10éC, particularly below -20éC, particularly below -30eC, particularly below -40eC, particularly below -50eC, particularly below -56,6éC, particularly below or equal to -78.5éC.

Particularly, by using cryogenic CO₂ to pass through the torch and either directly or indirectly cool at least the electrode and particularly also other components of the torch, the respective consumable life span is increased.

While the cryogenic CO₂ used for said cooling maybe vented to the atmosphere, this flow can also be passed to the shield pathway (second passage) so that it can be used as the shielding medium or passed to a member (e.g. muffler) to generate a curtain flow around the torch which will be described in more detail below.

Particularly, according to an embodiment of the present invention, said channel is in flow connection with the second passage so as to vent said CO₂ via the second passage.

Further, according to an embodiment of the present invention, the cutting torch comprises at least one duct providing a flow connection between said at least one channel and the second passage, wherein the at least one duct extends through the first passage. Particularly, the cutting torch may comprise two opposing ducts providing a flow connection between said channel and the second passage, respectively, wherein the ducts extend through the first passage (e.g. on opposite sides of the electrode).

Further, according to an embodiment of the present invention, said at least one channel is in flow connection with a discharge opening that is arranged on a lateral outside of the shielding cap for venting CO₂ into the surrounding atmosphere via said opening.

Further, according to an embodiment of the present invention, the cutting torch comprises at least one duct providing a flow connection between said at least one channel and said opening, wherein the at least one duct crosses the first passage and the second passage.

Further, according to an embodiment of the present invention, said at least one channel is in flow connection with a member arranged on a lateral outside of the shielding cap, which member is configured to generate a curtain flow comprising said CO₂ used for cooling of the electrode before.

Further, according to an embodiment of the present invention, the cutting torch comprises at least one duct providing a flow connection between said at least one channel and said member, wherein the at least one duct crosses through the first passage and the second passage.

Further, according to an embodiment of the present invention, the member is an annular member extending circumferentially on a lateral outside of the shielding cap in a peripheral direction of the shielding cap. Particularly, said member can be a muffler. Particularly, such a muffler may provide a buffer for at least one of: particulates, radiation, sound, or gaseous contaminations.

Further, according to an embodiment of the present invention, the device comprises a source for providing cryogenic CO₂, which source for providing cryogenic CO₂ is configured to be brought into flow connection with said at least channel or is in flow connection with said channel to feed cryogenic CO₂ into said at least one channel.

Further, according to an embodiment of the present invention, the device comprises a source for providing said plasma gas, which source for providing said plasma gas is configured to be brought into flow connection with said first passage or is in flow connection with said first passage to feed plasma gas into said first passage.

Further, according to an embodiment of the present invention, the device comprises a source for providing a shielding medium (e.g. fluid), which source for providing shielding medium is configured to be brought into flow connection with the second passage or is in flow connection with said second passage to feed shielding medium into said second passage.

According to yet another aspect of the present invention, a method for plasma cutting a workpiece using a device according to the present invention is disclosed, wherein for plasma cutting the workpiece a plasma arc is generated using the electrode and a plasma gas that is fed into the first passage, and wherein a shielding medium is fed into the second passage so as to generate a shielding flow coaxially surrounding the plasma arc, and wherein cryogenic CO₂ is fed into said at least one channel to cool the electrode upon plasma cutting the workpiece.

Further, according to an embodiment of the method according to the present invention, the CO₂ of said cryogenic CO₂ is one of:
- passed through the at least one duct into the second passage,
- passed through the at least one duct to an opening that is arranged on a lateral outside of the shielding cap, wherein CO₂ is vented into the surrounding atmosphere via said opening,
- passed through the at least one duct to a member arranged on a lateral outside of the shielding cap so as to generate a curtain flow comprising CO₂ that is directed towards the workpiece.

In the following, further examples and embodiments of the present invention are described with reference to the Figures, wherein
- Fig. 1: shows a schematic cross-sectional view of an embodiment of a device according to the present invention,
- Fig. 2: shows a schematic cross-sectional view of a further embodiment of a device according to the present invention,
- Fig. 3: shows a schematic cross-sectional view of a further embodiment of a device according to the present invention; and
- Fig. 4: shows on the left-hand side a further embodiment of a device according to the present invention relating to venting cryogenic CO₂ used for indirect cooling of the electrode into the second (shielding medium) passage and a further embodiment (right-hand side) relating to passing the cryogenic CO₂ to a member (e.g. muffler) on a lateral outside of the shielding cap of the device.

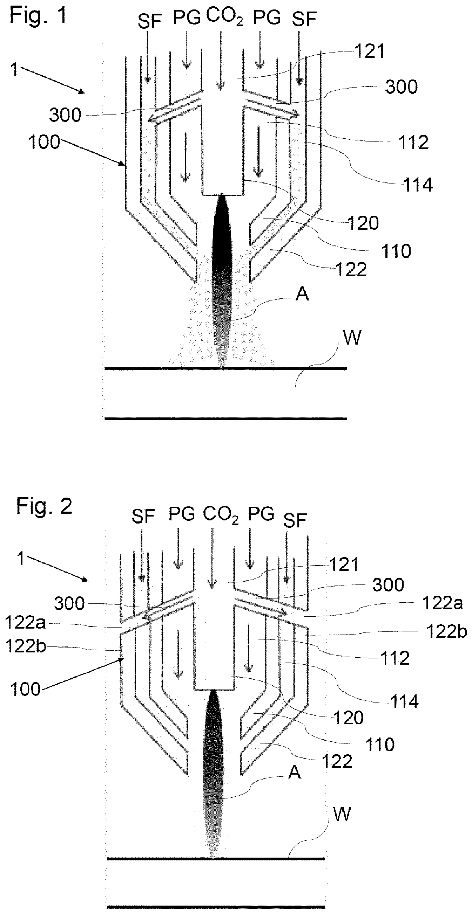

Figure 1 shows an embodiment of a device 1 for plasma cutting a workpiece W according to the present invention. The device 1 comprises a cutting torch 100 configured to generate a plasma arc A between the cutting torch 100 and the workpiece W, wherein the cutting torch 100 comprises an electrode 120, which is coaxially surrounded by a nozzle 110, thereby defining a first passage 112 for passing of a plasma gas PG between the electrode 120 and the nozzle 110, wherein the nozzle 110 is coaxially surrounded by a shielding cap 122, thereby defining a second passage 114 for passing of a shielding medium flow SF between nozzle 110 and shielding cap 122, wherein here the electrode 120 a channel 121 for receiving cryogenic CO₂ so that cryogenic CO₂ directly touches the electrode 112 to cool the electrode 112.

Particularly, as indicated in Fig. 1, the cutting torch 100 comprises two opposing ducts 300 connecting the channel 121 that extends within the electrode 112 to the second passage 11, so that CO₂ from the channel 121 is vented out of the cutting torch 100 via the first passage 112 and is thereby directed onto the workpiece W. Particularly, the ducts 300 may extend on opposite sides of the electrode 112 and cross the first passage 112 before opening into the second passage 114.

Fig. 2 shows a further embodiment of a device according to the present invention, wherein here, in contrastto Fig. 1 said channel 121 is now in flow connection with two discharge openings 122a that are arranged on a lateral outside 122b of the shielding cap 122, respectively, for venting CO₂ from the channel 121 into the surrounding atmosphere via said discharge openings 122a. Also here, the cutting torch may comprise two ducts 300 providing a flow connection between said channel 121 and the respective discharge opening 122a, wherein the ducts 300 may extend on opposite sides of the electrode through the first passage 112 and the second passage 114 towards the respective opening 122a.

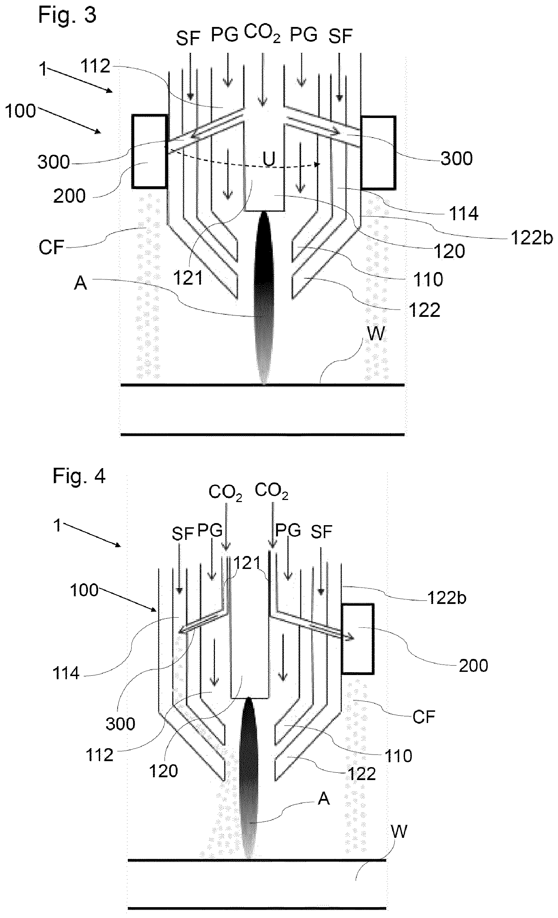

Fig. 3 shows a further embodiment of a device according to the present invention. Here, in contrast to Figs. 1 and 2, said channel 121 is in flow connection with a member 200 arranged on a lateral outside 122b of the shielding cap 122, which member 200 is configured to generate a curtain flow CF comprising CO₂ passed from the channel 121 to said member 200, which curtain flow is directed towards the workpiece W and particularly surrounds the plasma arc A. Particularly, the channel 121 is connected via two opposing ducts 300 to said member 200 (e.g. a muffler), wherein the respective duct extends through the first passage 112 and the second passage 114 on opposite sides of the electrode 112. Further, particularly, the member 200 can be an annular member 200 extending on the lateral outside 122b of the shielding cap 122 in a peripheral direction U of the shielding cap 122.

Furthermore, as indicated in Fig. 4, the channel 121 that is incorporated into the electrode 112 in the above-described embodiments can also be formed as a separate channel 121 of the cutting torch 100 that extends along the electrode 112 and is in thermal contact with the latter to indirectly cool the electrode 112 with the cryogenic CO₂. Particularly, the cutting torch 100 may comprise two opposing channels 121 on opposite sides of the electrode 112 wherein each channel 121 is in flow connection to a duct 300, wherein the ducts 300 may connect to a discharge opening 122a, respectively (not shown in Fig. 4, cf. Fig. 2), or may connect to the second passage as described in conjunction with Fig. 1 (shown on the left-hand side of Fig. 4), or may connect to the member 200 as described in conjunction with Fig. 3 (shown on the right-hand side of Fig. 4).

**List of reference numerals**

| | |
|---|---|
| 1 | Device for cutting a workpiece |
| 100 | Cutting torch |
| 110 | Nozzle |
| 112 | First passage |
| 114 | Second passage |
| 120 | E lectrode |
| 121 | Channel |
| 122 | Shielding cap (shield) |
| 122a | Discharge opening |
| 122b | Lateral outside |
| 200 | Member |
| 300 | duct |
| U | Peripheral direction |
| PG | Plasma gas |
| SF | S hield medium flow |
| CF | Curtain flow |
| A | Plasma Arc |
| W | Workpiece |

## Claims

1. Device (1) for plasma cutting a workpiece (W), comprising a cutting torch (100) configured to generate a plasma arc (A) between the cutting torch (100) and the workpiece (W), wherein the cutting torch (100) comprises an electrode (120), which is coaxially surrounded by a nozzle (110), thereby defining a first passage (112) for passing of a plasma gas (PG) between electrode (120) and nozzle (110), wherein the nozzle (110) is coaxially surrounded by a shielding cap (122), thereby defining a second passage (114) for passing of a shielding medium flow (SF) between nozzle (110) and shielding cap (122),
**characterized in that**
the electrode (120) forms at least one channel (121) for receiving cryogenic CO₂ so that cryogenic CO₂ can touch the electrode to cool the electrode o
r
that the cutting torch (100) comprises at least one channel (121) arranged adjacent the electrode (112), which at least one channel (121) is in thermal contact with the electrode (111) so as to cool the electrode (112).

2. The device according to claim 1, **characterized in that** said at least one channel (121) is in flow connection with the second passage (114) so as to vent CO₂ via the second passage (114).

3. The device according to claim 2, **characterized in that** the cutting torch (100) comprises at least one duct (300) providing a flow connection between said at least one channel (121) and the second passage (114), wherein the at least one duct (300) extends through the first passage (112).

4. The device according to claim 1, **characterized in that** said at least one channel (121) is in flow connection with a discharge opening (122a) that is arranged on a lateral outside (122b) of the shielding cap (122) for venting CO₂ into the surrounding atmosphere via said discharge opening (122a).

5. The device according to claim 4, **characterized in that** the cutting torch (100) comprises at least one duct (300) providing a flow connection between said at least one channel (121) and said discharge opening (122a), wherein the at least one duct (300) extends through the first passage (112) and the second passage (114).

6. The device according to claim 1, **characterized in that** said at least one channel (121) is in flow connection with a member (200) arranged on a lateral outside (122b) of the shielding cap (122), which member (200) is configured to generate a curtain flow (CF) comprising CO₂ passed from the at least one channel (121) to said member (200).

7. The device according to claim 6, **characterized in that** the cutting torch (100) comprises at least one duct (300) providing a flow connection between said at least one channel (121) and said member (200), wherein the at least one duct (300) extends through the first passage (112) and the second passage (114).

8. The device according to claim 6 or 7, **characterized in that** the member (200) is an annular member (200) extending on the lateral outside (122b) of the shielding cap (122) in a peripheral direction (U) of the shielding cap (122).

9. The device according to one of the claims 6 to 8, **characterized in that** the member (200) is a muffler.

10. The device according to one of the preceding claims, **characterized in that** the device (1) comprises a source for providing cryogenic CO₂, which source for providing cryogenic CO₂ is configured to be brought into flow connection with said at least one channel (121) or is in flow connection with said at least one channel (121) to feed cryogenic CO₂ into said at least one channel (121).

11. The device according to one of the preceding claims, **characterized in that** the device (1) comprises a source for providing said plasma gas (PG), which source for providing said plasma gas (PG) is configured to be brought into flow connection with said first passage (112) to feed plasma gas (PG) into said first passage (112).

12. The device according to one of the preceding claims, **characterized in that** the device (1) comprises a source for providing a shielding medium (SF), which source for providing shielding medium (S F) is configured to be brought into flow connection with the second passage (114) to feed shielding medium (SF) into said second passage (114).

13. Method for plasma cutting a workpiece using a device (1) according to one of the preceding claims, wherein for plasma cutting the workpiece (W) a plasma arc (A) is generated using the electrode (120) and a plasma gas (PG) that is fed into the first passage (112), and wherein a shielding medium (SF) is fed into the second passage (114) so as to generate a shielding medium flow (S F) coaxially surrounding the plasma arc (A), and wherein cryogenic CO₂ is fed into said at least one channel (121) to cool the electrode (120) upon plasma cutting the workpiece (W).

14. Method for plasma cutting a workpiece according to claim 13, wherein the cryogenic CO₂ is one of:
- passed through the at least one duct (300) into the second passage (112),
- passed through the at least one duct (300) to a discharge opening (122a) that is arranged on a lateral outside (122b) of the shielding cap (122), wherein CO₂ is vented into the surrounding atmosphere via said discharge opening (122a),
- passed through the at least one duct (300) to a member (200) arranged on a lateral outside (122b) of the shielding cap (122) so as to generate a curtain flow (CF) comprising CO₂ that is directed towards the workpiece (W).
